# EUROPÄISCHE PATENTANMELDUNG

(11) **EP 3 085 609 A1**
(43) Veröffentlichungstag der Anmeldung: **26.10.2016**
(21) Anmeldenummer: 15001241.7
(22) Anmeldetag: 23.04.2015
(51) Int. Cl.: B62K 15/00, B62K 19/06, B62K 19/18, F16B 7/04

(54) **POSITIONIERBARE STECKKUPPLUNG ZUR LÖSBAREN VERBINDUNG VON FAHRRADRAHMENTEILEN**

(71) Anmelder: Pedalpower Schönstedt&Busack GbR, 10317 Berlin (DE)
(72) Erfinder: Busack, Harald, 10317 Berlin (DE)
(74) Vertreter: Herzog, Benjamin

(57) **Zusammenfassung**

Die Erfindung umfasst: ein einführendes Element (1) und ein aufnehmendes Element (2), welche an ein Ende der miteinander zu verbindenden Rahmenrohre geschweißt oder gelötet werden, eine Überwurfmutter (3) und einen Sicherungsring (4), mit denen eine lösbare Verbindung der Elemente erreicht wird, unrund verlaufende Passflächen (10,11) an jeweils einem Element, die bei der Verspannung ineinander greifen und dadurch eine radiale Positionierung erlauben. Ein Zentrierbolzen (12), der zentral in eine Bohrung des einführenden Elements bevorzugt gepresst ist und vorteilhaft aus Kunststoff besteht, um nicht die Passflächen zu beschädigen, wird zuvor in eine Öffnung (13) in der Achse des aufnehmenden Elements (2) aufgenommen. Durch diese einfach vorzunehmende Bewegung wird eine axiale Positionierung erreicht, die das Ineinandergreifen der Passflächen (10,11) sowie die Verspannung durch die Überwurfmutter (3) erleichtert.

## Beschreibung

Die vorliegende Erfindung betrifft eine Kupplung für insbesondere Steckräder mit axialer Positionierungsmöglichkeit.

Eine konventionelle Steckradkupplung umfasst eine stabile und wiederlösbare Verbindung, die den vorderen Fahrradrahmen mit dem hinteren verbindet. Vor allem bei sonst schwer zu transportierenden Tandems sind Steckradkupplungen von großer Bedeutung. Die Kupplung ist in der Regel mit dem Rahmen verschweißt oder verlötet. Sie umfasst des Weiteren ein Gewinde, wodurch die beiden Rahmenteile miteinander lösbar verspannt werden können. Die radiale Positionierung, d.h. das Festhalten beider Rahmenteile in derselben Rotationsachse, wird entweder durch Zahnräder wie in der EP0723510B1 durch Zahnräder oder in der DE102011122798A1 durch polygone Passflächen erreicht. Für eine optimale axiale Positionierung, d.h. das Einfinden beider Rahmenteile auf einer longitudinalen Achse bietet der Stand der Technik bisher keine Lösung. Da oftmals mehrere lange Rahmenrohre des Fahrrads gleichzeitig eingefügt werden müssen, ergibt sich aufgrund des Gewichts der restlichen Fahrradbauteile ein komplexer Einfädelungsprozess. Der Gewindeansatz der aufnehmenden Kupplungsseite fügt sich nur bei derselben longitudinalen Achse. Diese Achse zu finden, ist bei häufigem Montieren und Demontieren des Fahrradrahmens umständlich und zeitraubend.

Mit der vorliegenden Erfindung soll die axiale Positionierung einer Steckradkupplung erleichtert werden.

Gemäß der vorliegenden Erfindung wird eine Steckradkupplung bereitgestellt, die folgendes umfasst: ein einführendes Element und ein aufnehmendes Element, welche an ein Ende der miteinander zu verbindenden Rahmenrohre geschweißt oder gelötet werden, eine Überwurfmutter und einen Sicherungsring, mit denen eine lösbare Verbindung der Elemente erreicht wird, unrund verlaufende Passflächen an jeweils einem Element, die bei der Verspannung ineinander greifen und dadurch eine radiale Positionierung erlauben. Ein Zentrierbolzen, der zentral in eine Bohrung des einführenden Elements bevorzugt gepresst ist und vorteilhaft aus Kunststoff besteht, um nicht die Passflächen zu beschädigen, wird zuvor in eine Öffnung in der Achse des aufnehmenden Elements aufgenommen. Durch diese einfach vorzunehmende Bewegung wird eine axiale Positionierung der beiden Kupplungselemente erreicht, die das Ineinandergreifen der Passflächen sowie die Verspannung durch die Überwurfmutter erleichtert. Vor allem beim gleichzeitigen Einführen mehrerer langer Rahmenrohre des Fahrrads ergibt sich durch die Erfindung eine deutliche Verbesserung. Das häufige Montieren und Demontieren des Fahrradrahmens wird nicht erheblich praktikabler. Der Zentrierbolzen stellt somit eine Montagehilfe dar, mit der schnell und problemlos ohne hohen Arbeits- und Kostenaufwand Steckradkupplungen verbunden werden können und insbesondere die empfindlichen Passflächen der Kupplungen bei der Positionierung nicht beschädigt werden.

### Beschreibung der Zeichnungen

Fig. 1 ist eine perspektivische Ansicht einer Steckradkupplung gemäß der bevorzugten Ausführungsform der vorliegenden Erfindung.
Fig. 2 ist eine perspektivische Explosionsdarstellung der in Fig. 1 abgebildeten Steckradkupplung.
Fig. 3 ist eine planare Darstellung des (in Fig. 1 mit 12 bezeichneten) Zentrierbolzens.
Fig. 4 ist eine planare Darstellung der in Fig. 1 abgebildeten Steckradkupplung mit verspannten Elementen im Querschnitt.
Fig. 5 ist eine schematische Darstellung von zwei in Fig. 1 abgebildeten Steckradkupplungen an einem Steckradrahmen.

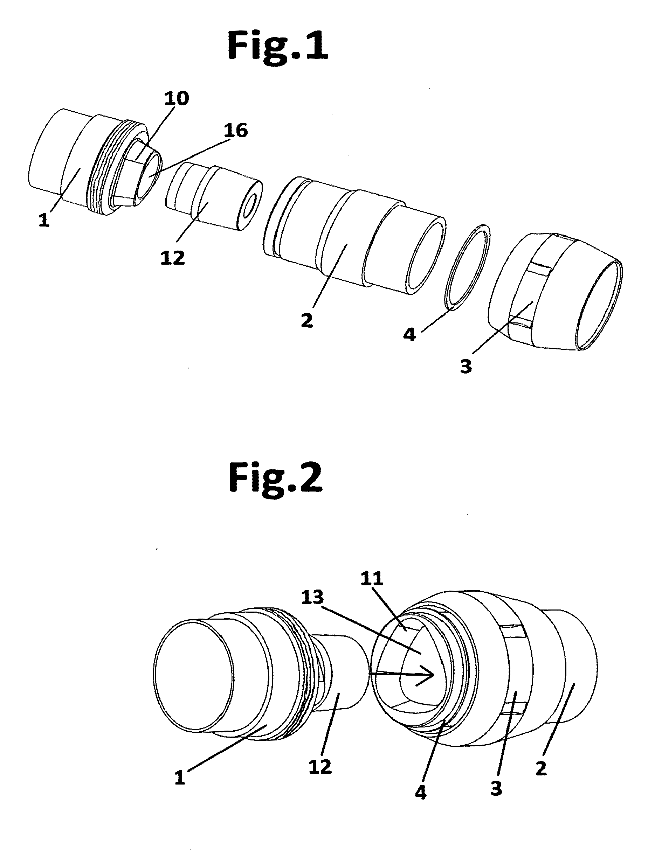

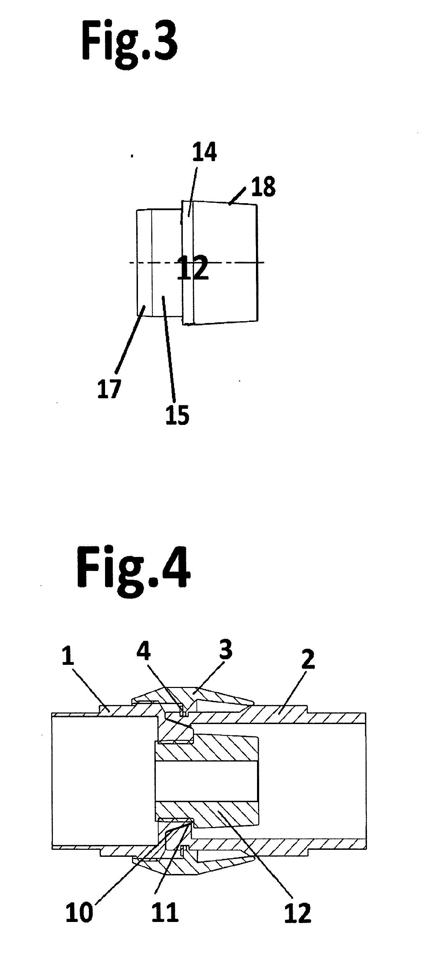

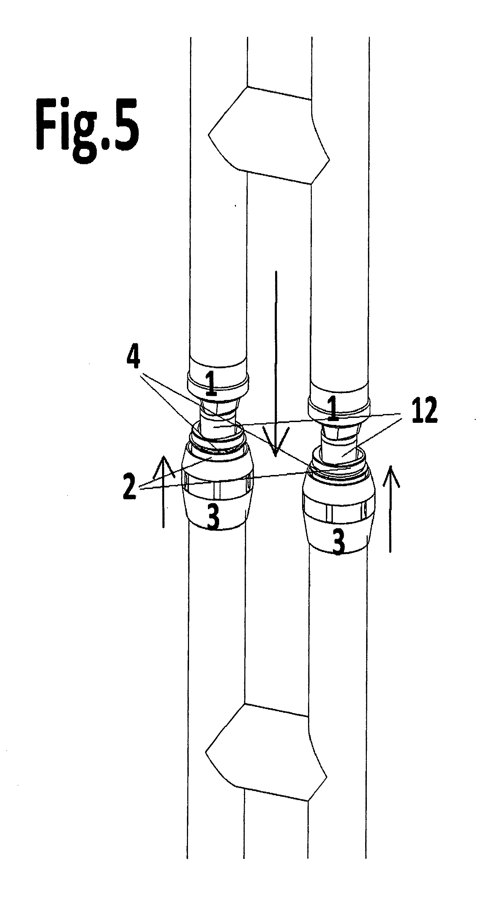

Im Folgenden wird auf die Zeichnungen und zunächst auf die Fig. 1-5 Bezug genommen. Demnach umfasst eine Kupplung für ein Steckrad gemäß der bevorzugten Ausführungsform der vorliegenden Erfindung ein einführendes Element (1) und ein aufnehmendes Element (2). Jedes dieser Elemente ist an ein Ende der miteinander zu verbindenden Rahmenrohre geschweißt oder gelötet. Mit einer Überwurfmutter (3), der zur Druckabstützung ein Sicherungsring (4) auf dem aufnehmenden Teil (2) vorgelagert ist, werden die beiden Elemente zu einer lösbaren Verbindung verspannt. Die Elemente verfügen jeweils über polygone bevorzugt dreieckige Passflächen (10, 11), die beim Zusammenführen ineinander greifen. Dadurch werden entstehende Drehmomente aufgenommen und eine radiale Fixierung erreicht. Ein Zentrierbolzen (12) befindet sich in einer Öffnung im Zentrum der Passflächen des einführenden Elements (1). Im Zentrum des aufnehmenden Elements (2) ist eine Öffnung (13), in die der Zentrierbolzen (12) beim Zusammenführen der Elemente eingeführt wird. Dadurch wird die Kupplung axial positioniert.

Der Zentrierbolzen (12) weist an dem in Richtung des aufnehmenden Elements gerichteten Abschnitt eine Verdickung (14) auf. Dadurch wird ein Verrutschen des Zentrierbolzens in das einführende Element verhindert.

Das Verhältnis von dünnem Abschnitt des Zentrierbolzens (15) zu dem Abschnitt mit der Verdickung (14) ist 4 zu 5, wodurch die beste Stabilität beim Einfädelungsprozess gewährleistet ist.

Der Zentrierbolzen (12) ist in eine Bohrung im einführenden Element (17) eingepresst. Dies ist die einfachste und kostengünstigste Möglichkeit, den Zentrierbolzen (12) anzubringen. Zudem ist eine Auswechslung bei Verschleiß möglich.

Der dünne Abschnitt des Zentrierbolzens (15) weist im distalen Drittel eine Anschrägung (16) von weniger als 10 ° auf. Dadurch kann der Bolzen mit weniger Widerstand eingepresst werden.

Die Verdickung des Zentrierbolzens (14) weist ab dem proximalsten Zehntel eine Anschrägung (18) von weniger als 10° auf, wodurch der Einfädelungsprozess durch den schmaleren Radius im proximalen Teil erleichtert wird.

## Patentansprüche

1. Steckradkupplung mit
einführendem Element (1), aufnehmendem Element (2), Überwurfmutter (3) und Sicherungsring (4);
wobei jeweils ein Element an ein Ende der miteinander zu verbindenden Rahmenrohre geschweißt oder gelötet wird und
mit einer Überwurfmutter (3) zu einer lösbaren Verbindung verspannt wird;
die radiale Positionierung der Kupplung am jeweils vorderen Ende des einführenden Elements (1) und aufnehmenden Elements (2) mit einem unrunden Verlauf von Passflächen (10, 11) in Form eines Polygons erreicht wird;
ein Zentrierbolzen (12) auf der Achse des einführenden Elements (1) in eine Öffnung (13) auf der Achse des aufnehmenden Elements (2) aufgenommen wird.

2. Steckradkupplung nach Anspruch 1, wobei der Zentrierbolzen (12) an dem in Richtung des aufnehmenden Elements gerichteten Abschnitt eine Verdickung (14) aufweist.

3. Steckradkupplung nach Anspruch 2, wobei das Verhältnis von dünnem Abschnitt des Zentrierbolzens (15) zu dem Abschnitt mit der Verdickung (14) 4 zu 5 ist.

4. Steckradkupplung nach Anspruch 3, wobei der Zentrierbolzen (12) in eine Bohrung im einführenden Element (16) eingepresst ist.

5. Steckradkupplung nach Anspruch 4, wobei der dünne Abschnitt des Zentrierbolzens (15) im distalen Drittel eine Anschrägung (17) von weniger als 10 ° aufweist.

6. Steckradkupplung nach Anspruch 5, wobei die Verdickung des Zentrierbolzens (14) ab dem proximalsten Zehntel eine Anschrägung (18) von weniger als 10° aufweist.

7. Steckradkupplung nach Anspruch 6, wobei der Zentrierbolzen (13) aus Kunststoff besteht.

## Geänderte Patentansprüche

### Geänderte Patentansprüche gemäss Regel 137(2) EPÜ.

1. Steckradkupplung mit
einführendem Element (1), aufnehmendem Element (2), Überwurfmutter (3) und Sicherungsring (4);
wobei jeweils ein Element an ein Ende der miteinander zu verbindenden Rahmenrohre geschweißt oder gelötet wird und
mit einer Überwurfmutter (3) zu einer lösbaren Verbindung verspannt wird;
die radiale Positionierung der Kupplung am jeweils vorderen Ende des einführenden Elements (1) und aufnehmenden Elements (2) mit einem unrunden Verlauf von Passflächen (10, 11) in Form eines Polygons erreicht wird, **dadurch gekennzeichnet, dass**
ein Zentrierbolzen (12) auf der Achse des einführenden Elements (1) in eine Öffnung (13) auf der Achse des aufnehmenden Elements (2) aufgenommen wird.

2. Steckradkupplung nach Anspruch 1, wobei der Zentrierbolzen (12) an dem in Richtung des aufnehmenden Elements gerichteten Abschnitt als eine Verdickung (14) und in entgegengesetzter Richtung als eine Verdünnung (15) ausgebildet ist.

3. Steckradkupplung nach Anspruch 2, wobei das axiale Längenverhältnis von der Verdünnung (15) zu der Verdickung (14) 4 zu mindestens 5 ist.

4. Steckradkupplung nach Anspruch 3, wobei der Zentrierbolzen (12) in eine Bohrung im einführenden Element (16) eingepresst ist.

5. Steckradkupplung nach Anspruch 4, wobei mindestens ab dem distalen Drittel die Verdünnung (15) als eine Anschrägung (17) von weniger als 10-° mit distal abnehmenden Umfang ausaebildet ist.

6. Steckradkupplung nach Anspruch 5, wobei mindestens ab dem proximalen Zehntel die Verdickung (14) als eine Anschrägung (18) von weniger als 10° mit distal abnehmenden Umfang ausgebildet ist.

7. Steckradkupplung nach Anspruch 6, wobei der Zentrierbolzen (13) aus Kunststoff besteht.

8. Steckradkupplung nach einem der vorangehenden Ansprüche, wobei der Zentrierbolzen (12) sich in einer Bohrung (19) im Zentrum der Passflächen des einführenden Elements (1) befindet.
